# EUROPEAN PATENT APPLICATION

(11) **EP 4 489 214 A1**
(43) Date of publication of application: **08.01.2025**
(21) Application number: 23763269.0
(22) Date of filing: 17.02.2023
(51) Int. Cl.: H01M 50/559, H01M 50/107, H01M 50/152, H01M 50/167, H01M 50/179, H01M 50/184, H01M 50/545, H01M 50/548, H01M 50/567

(54) **CYLINDRICAL BATTERY**

(30) Priority: 04.03.2022 JP 2022033213
(71) Applicant: Panasonic Energy Co., Ltd., Osaka 570-8511 (JP)
(72) Inventor: YAMASHITA, Shuichi, Osaka 571-0057 (JP); FUKUOKA, Takahiro, Osaka 571-0057 (JP); SUZUKI, Kana, Osaka 571-0057 (JP)
(74) Representative: Eisenführ Speiser
(86) International application number: PCT/JP2023/005675
(87) International publication number: WO 2023/167010

(57) **Abstract**

A cylindrical battery (10) comprises: a housing canister (16) which is bottomed and which accommodates an electrode body (14); and an opening-sealing body (17) which is fixed to a crimping section (31) by crimping with a gasket (18) interposed therebetween, the crimping section being formed by bending an opening part of the housing canister (16). The opening-sealing body (17) includes a cap (28) that includes a flange part (28b) which is crimped by the crimping section (31). The flange part (28b) of the cap (28) includes a recess (28c) the thickness of which is made thin. The gasket (18) includes a projection (18a) that projects from the leading edge of the crimping section (31) and that fits into the recess (28c).

## Description

### TECHNICAL FIELD

The present disclosure relates to a cylindrical battery.

### BACKGROUND ART

The application of lithium ion batteries has been broadened to include those on-board and for driving power and storage of electricity. For mounting on products, multiple batteries are connected in series and/or in parallel and are modularized. For electrical connection of the batteries, demand from clients has been increasing for one side surface connection in which a positive side is connected at a positive electrode of the battery on a top surface of a cap and a negative side is connected at a staking portion (staking shoulder portion) of the battery.

Patent Literature 1 describes a cylindrical battery that is sealed by staking a sealing assembly at an opening of an outer housing can via a gasket.

### CITATION LIST

### PATENT LITERATURE

PATENT LITERATURE 1: Japanese Unexamined Patent Application Publication No. 2008-282679

### SUMMARY

In a cylindrical battery described in Patent Literature 1 or the like, in welding a coupling plate at a staking shoulder portion through one side surface connection, if there is a gap between the staking shoulder portion and the coupling plate, a welding defect occurs. The cause of the gap generation is that a gasket rises upward beyond the staking shoulder portion and the gasket interferes with the coupling plate. As a countermeasure against this, shortening the gasket protruding from a distal end of the staking portion is conceived. However, when the gasket protruding from the distal end of the staking portion is shortened, the insulating performance between the distal end of the staking portion and a cap could deteriorate.

It is an advantage of the present disclosure to provide a cylindrical battery capable of securing welding quality without generating a gap between a staking shoulder portion and a coupling plate in welding the coupling plate at the staking shoulder portion.

A cylindrical battery according to the present disclosure comprises: a bottomed cylinder-shaped outer housing can that houses an electrode assembly; and a sealing assembly fixed by staking, via a gasket, at a staking portion formed by bending an opening of the outer housing can. The sealing assembly includes a cap having a flange staked at the staking portion, the flange of the cap includes a recess formed with a thin plate thickness, and a protruding portion of the gasket is housed in the recess, the protruding portion protruding from a distal end in a radial direction of the staking portion.

In the cylindrical battery according to the present disclosure, the gasket protruding from the distal end of the staking portion is not positioned above relative to the staking shoulder portion, and therefore, in welding the coupling plate at the staking shoulder portion, no gap is generated between the staking shoulder portion and the coupling plate, thereby being able to secure the welding quality.

### BRIEF DESCRIPTION OF DRAWINGS

FIG. 1 is a side and partial sectional view of a cylindrical battery of an embodiment.
FIG. 2 is a plan view of a sealing assembly of the embodiment.
FIG. 3 is an expanded sectional view of the vicinity of a staking portion in welding a coupling plate at a staking shoulder portion in a cylindrical battery of a first embodiment.
FIG. 4 is an expanded sectional view of the vicinity of the staking portion in welding the coupling plate at the staking shoulder portion in the cylindrical battery of a second embodiment.
FIG. 5 is an expanded sectional view of the vicinity of a staking portion in welding a coupling plate at a staking shoulder portion in a conventional cylindrical battery.

### DESCRIPTION OF EMBODIMENTS

Hereinafter, an embodiment of the present disclosure will be described in detail with reference to the drawings. In the following description, the specific shapes, materials, directions, numerical values, and the like are exemplary illustrations for easier understanding of the present disclosure and may be appropriately changed in accordance with applications, purposes, specifications, and the like. Further, it is originally expected that the constituent elements of the embodiments and the modification described below are selectively combined.

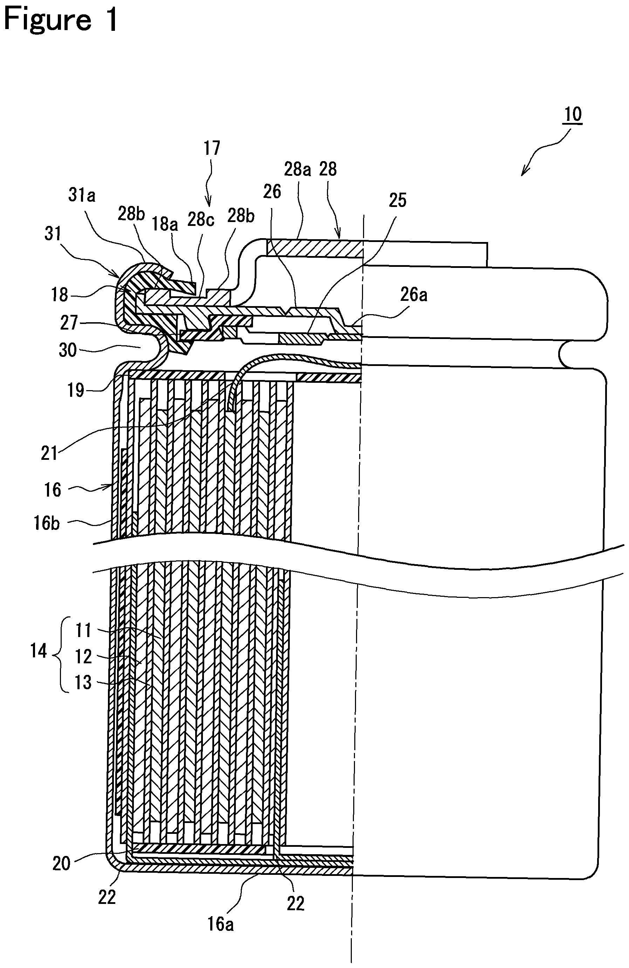

With reference to the drawings, examples of embodiments of a cylindrical battery 10 according to the present disclosure will be described in detail below. FIG. 1 is a side and partial sectional view of the cylindrical battery 10 as an example of an embodiment.

### <First Embodiment>

As shown in FIG. 1, the cylindrical battery 10 comprises a bottomed cylinder-shaped outer housing can 16 including a bottom surface 16a and a side wall 16b, a sealing assembly 17 that seals an opening of the outer housing can 16, and a gasket 18 interposed between the outer housing can 16 and the sealing assembly 17. Further, the cylindrical battery 10 comprises an electrode assembly 14 and an electrolyte that are housed in the outer housing can 16. The electrode assembly 14 includes a positive electrode 11, a negative electrode 12, and separators 13, and has a structure in which the positive electrode 11 and the negative electrode 12 are wound in a spiral via the separators 13.

In the present specification, for convenience of explanation, a direction along the axial direction of the outer housing can 16 is assumed to be a "longitudinal direction or up-down direction", and the sealing assembly 17 side (opening side of the outer housing can 16) of the cylindrical battery 10 is assumed to be above and the bottom surface 16a side of the outer housing can 16 is assumed to be below.

The positive electrode 11 includes a positive electrode core and a positive electrode mixture layer formed on at least one side of the core. For the positive electrode core, metal foil stable in a potential range of the positive electrode 11, such as aluminum and an aluminum alloy, a film with the metal disposed on the surface layer, and the like can be used. The positive electrode mixture layer includes a positive electrode active material, a conductive agent, such as acetylene black, and a binding agent, such as polyvinylidene difluoride, and is preferably formed on each of opposite sides of the positive electrode core. For the positive electrode active material, for example, a lithium transition metal composite oxide is used.

The negative electrode 12 includes a negative electrode core and a negative electrode mixture layer formed on at least one side of the core. For the negative electrode core, metal foil stable in a potential range of the negative electrode 12, such as copper and a copper alloy, a film with the metal disposed on the surface layer, and the like can be used. The negative electrode mixture layer includes a negative electrode active material and a binding agent, such as styrene butadiene rubber (SBR), and is preferably formed on each of opposite sides of the negative electrode core. For the negative electrode active material, for example, graphite and silicon-containing compound are used.

The electrolyte may be either an aqueous electrolyte or a non-aqueous electrolyte. Further, the electrolyte may be either a liquid electrolyte or a solid electrolyte. In the present embodiment, a non-aqueous electrolyte is used. The non-aqueous electrolyte includes a non-aqueous solvent and electrolyte salt dissolved in the non-aqueous solvent. For the non-aqueous solvent, for example, esters, ethers, nitriles, amides, and a mixed solvent of two or more of these may be used. The non-aqueous solvent may contain a halogen-substituted substance formed by replacing at least a portion of hydrogen of these solvents with a halogen atom such as fluorine. For the electrolyte salt, for example, lithium salt such as LiPF₆ is used.

The cylindrical battery 10 comprises insulating plates 19, 20 that are respectively disposed above and below the electrode assembly 14. In the example shown in FIG. 1, a positive electrode tab 21 connected to the positive electrode 11 passes through a through-hole of the insulating plate 19 and extends to the sealing assembly 17 side. A negative electrode tab 22 is connected to each of an outermost circumference and an innermost circumference of the negative electrode 12, the negative electrode tab 22 connected to the outermost circumference of the negative electrode 12 passing an outer side of the insulating plate 20 and extending to the bottom surface 16a side of the outer housing can 16, the negative electrode tab 22 connected to the innermost circumference of the negative electrode 12 passing through a through-hole of the insulating plate 20 and extending to the bottom surface 16a of the outer housing can 16. The positive electrode tab 21 is connected to a terminal plate 25 as a bottom plate of the sealing assembly 17 by welding or the like and a cap 28 of the sealing assembly 17 electrically connected to the terminal plate 25 serves as a positive electrode external terminal. The negative electrode tab 22 is connected to an inner surface of the bottom surface 16a of the outer housing can 16 by welding or the like and the outer housing can 16 serves as a negative electrode external terminal. The detailed structure of the sealing assembly 17 will be described later.

The outer housing can 16 is a metal container opened at one end (upper end) in the axial direction, and the bottom surface 16a is in a disk shape and the side wall 16b is cylindrically formed along an outer circumferential edge of the bottom surface 16a. The sealing assembly 17 is formed in a disk shape corresponding to the shape of the opening of the outer housing can 16. The gasket 18 is an annular resin member and secures the sealability inside the battery, as well as the electrical insulation between the outer housing can 16 and the sealing assembly 17.

In the outer housing can 16, an opening edge (upper end portion) is inwardly bent so that a staking portion 31 that presses the sealing assembly 17 via the gasket 18 is formed. Further, in the outer housing can 16, a grooved portion 30, which is configured to support the sealing assembly 17 via the gasket 18, is formed such that the side wall 16b inwardly protrudes from the outer side. The grooved portion 30 is annularly formed along the circumferential direction of the outer housing can 16 by externally spinning the side wall 16b.

The staking portion 31 opposes the grooved portion 30 via the sealing assembly 17 and the gasket 18 and sandwiches the sealing assembly 17 in cooperation with the grooved portion 30. The staking portion 31 is, as with the grooved portion 30, annularly formed along the circumferential direction of the outer housing can 16 and presses a circumferential edge of the sealing assembly 17 via the gasket 18 from above. The staking portion 31 includes a staking shoulder portion 31a that is the highest portion in the axial direction of the outer housing can 16.

The sealing assembly 17 is a disk-shaped member including a CID mechanism (current interrupt mechanism). The sealing assembly 17 has a structure in which the terminal plate 25, an insulating plate 27, a rupture disk 26, and the cap 28 are stacked in this order from the electrode assembly 14 side. The terminal plate 25 is a metal plate including an annular portion to which the positive electrode tab 21 is connected and a thin center portion that is detached from the annular portion when the internal pressure of the battery exceeds a predetermined threshold.

The rupture disk 26 is disposed opposite to the terminal plate 25 with the insulating plate 27 sandwiched therebetween. The rupture disk 26 includes a vent member 26a that ruptures when the internal pressure of the battery exceeds a predetermined threshold, and an outer circumferential portion, which is staked at the staking portion 31, on an outer circumferential side. The vent member 26a is connected to the center portion of the terminal plate 25 by welding or the like. When an abnormal condition occurs in the battery and the internal pressure increases to exceed an operating pressure of the CID mechanism, the terminal plate 25 ruptures and the center portion is detached from the annular portion, so that the vent member 26a deforms in such a manner as projecting to the outer side of the battery. As a result, the current path is disconnected. When the internal pressure of the battery further increases to exceed a vent pressure, the vent member 26a ruptures so that a gas discharge port is formed.

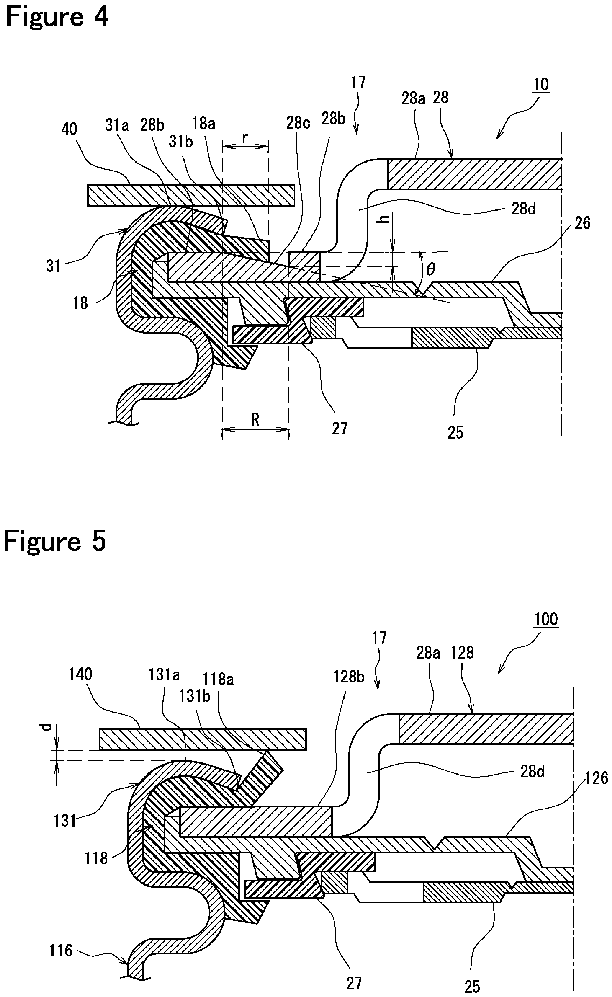

Here, description will be made of the cause of a welding defect of a staking shoulder portion 131a in a cylindrical battery 100 with a conventional structure. FIG. 5 is an expanded sectional view of the vicinity of a staking portion 131 in welding a coupling plate 140 at the staking shoulder portion 131a in the cylindrical battery 100.

The structure of the cylindrical battery 100 with the conventional structure of FIG. 5, excluding a flange 128b of a cap 128, is the same as that of the cylindrical battery 10 of the present embodiment shown in FIG. 1. The flange 128b of the cap 128 of the cylindrical battery 100 is in a flat annular shape with a uniform plate thickness.

In the cylindrical battery 100 with the conventional structure, the staking portion 131 is formed by staking the flange 128b of the cap 128 and the rupture disk 126 at the opening edge of an outer housing can 116 via a gasket 118, which is the same as the example. In the cylindrical battery 100 with the conventional structure, at a distal end portion 131b on an inner circumferential side in a radial direction of the staking portion 131, the gasket 118 is pressed against the flange 128b from above and is most deformed. Therefore, a protruding portion 118a of the gasket 118 bounces and rises from the flange 128b with the distal end portion 131b of the staking portion 131 as a starting point. Thus, when the length in the radial direction of the protruding portion 118a of the gasket 118 is long, a distal end of the protruding portion 118a of the gasket 118 is positioned above beyond the staking shoulder portion 131a.

In the cylindrical battery 100 with such a state, in welding the coupling plate 140 at the staking shoulder portion 131a, the distal end of the protruding portion 118a of the gasket 118 interferes with the coupling plate 140, so that a gap d is generated between the coupling plate 140 and the staking shoulder portion 131a as shown in FIG. 5. Accordingly, due to the presence of the gap d, a defect in welding between the coupling plate 140 and the staking shoulder portion 131a could occasionally occurs.

Next, with reference to FIG. 1, description will be made of the reason why the welding defect of a coupling plate 40 is suppressed in the structure of the sealing assembly 17 of the cylindrical battery 10 of the first embodiment.

The cylindrical battery 10 of the present embodiment comprises the bottomed cylinder-shaped outer housing can 16 that houses the electrode assembly 14 and the sealing assembly 17 fixed by staking via the gasket 18 at the staking portion 31 formed by bending the opening of the outer housing can 16. The sealing assembly 17 includes the cap 28 including a projection 28a projecting upward at a center portion and a flange 28b on an outer circumferential side of the projection 28a. The flange 28b of the cap 28 includes a recess 28c formed with a thin plate thickness, and the gasket 18 is configured such that a protruding portion 18a protruding from a distal end in the radial direction of the staking portion 31 is housed within the recess 28c.

In the cylindrical battery 10 of the present embodiment, since the recess 28c of the flange 28b is formed with a thin plate thickness, a distal end portion 31b of the staking portion 31 presses the gasket 18 so that the distal end of the protruding portion 18a of the gasket 18 deforms so as to be housed within the recess 28c. Therefore, the distal end of the gasket 18 is not positioned above relative to the staking shoulder portion 31a. In connecting the cylindrical battery 10 to an external terminal, the coupling plate 40 can be contacted with the staking shoulder portion 31a without a gap and thus can be surely welded. With the configuration of the sealing assembly 17 of the present embodiment, it is possible to secure the quality of welding the external terminal.

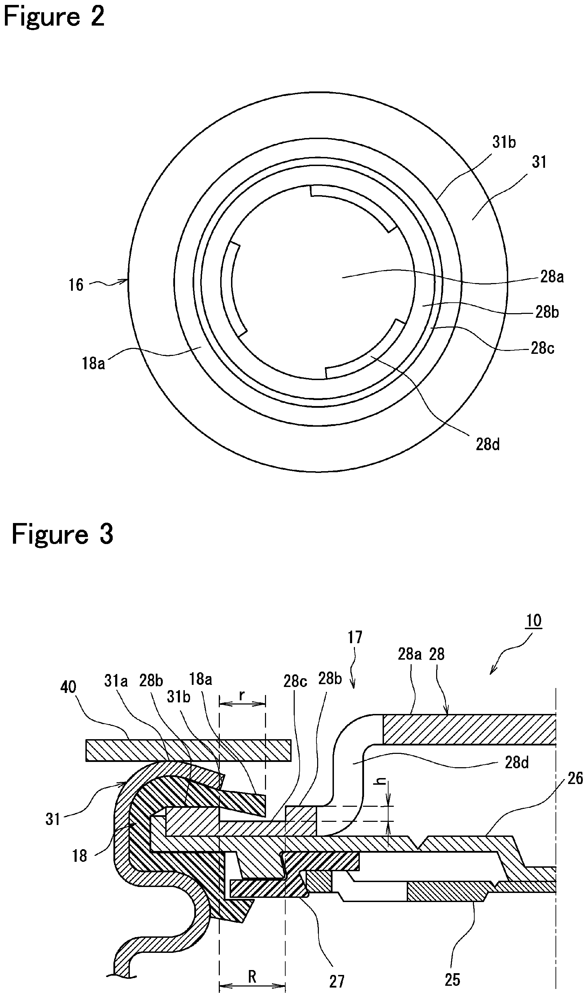

With reference to FIGS. 2 and 3, further description will be made of the structures of the sealing assembly 17 and the staking portion 31 of the cylindrical battery 10 of the present embodiment. FIG. 2 is a view of the cylindrical battery 10 of the present embodiment as seen from above. FIG. 3 is an expanded sectional view of the vicinity of the staking portion 31 in welding the coupling plate 40 at the staking shoulder portion 31a.

The staking portion 31 is annularly formed so as to extend radially inward from the opening edge of the outer housing can 16. The staking portion 31 presses, by staking, the flange 28b and the rupture disk 26 via the gasket 18. In the flange 28b, the annular recess 28c is formed on the inner circumferential side from the distal end portion 31b on the inner circumferential side of the staking portion 31. The gasket 18 includes the protruding portion 18a protruding radially inward from the distal end portion 31b on the inner circumferential side of the staking portion 31. The protruding portion 18a of the gasket 18 is housed within the recess 28c of the flange 28b. On a further inner circumferential side of the flange 28b, the projection 28a is formed. In the projection 28a, a plurality of holes 28d is formed, but this is not an essential configuration.

As shown in FIG. 3, when a length in the radial direction of the protruding portion 18a of the gasket 18 is assumed to be r and a length in the radial direction of the recess 28c is assumed to be R, the recess 28c is formed so as to satisfy R > r. With such formation, the distal end of the protruding portion 18a of the gasket 18 is surely housed within the recess 28c. Therefore, the protruding portion 18a of the gasket 18 does not rise upward beyond the staking shoulder portion 31a, and in welding the coupling plate 40 at the staking shoulder portion 31a, no gap is generated between the staking shoulder portion 31a and the coupling plate 40. Accordingly, the cylindrical battery 10 of the present embodiment has the structure in which the defect in welding the coupling plate 40 at the staking shoulder portion 31a is suppressed.

The distal end portion 31b on the inner circumferential side of the staking portion 31 is preferably formed substantially at the same position as that of the edge on the outer circumferential side of the recess 28c. This is because when the edge on the outer circumferential side of the recess 28c is positioned on the inner circumferential side relative to the distal end portion 31b of the staking portion 31, the distal end portion 31b presses the gasket 18 at a flat portion of the flange 28b, which could cause the protruding portion 18a of the gasket 18 to bounce and rise from the flange 28b with the distal end portion 31b as a starting point, in the same manner as in the conventional structure.

### <Second Embodiment>

FIG. 4 is an expanded sectional view of the vicinity of the staking portion 31 in welding the coupling plate 40 at the staking shoulder portion 31a in the cylindrical battery 10 of a second embodiment. The view of the cylindrical battery 10 of the second embodiment as seen from the above is the same as that of the first embodiment and thus, the illustration will be omitted. The cylindrical battery 10 of the second embodiment differs from the cylindrical battery 10 of the first embodiment in the cross-sectional shape of the recess 28c provided in the flange 28b.

In the present embodiment as well, when the length in the radial direction of the protruding portion 18a of the gasket 18 is assumed to be r and the length in the radial direction of the recess 28c is assumed to be R, the recess 28c is formed so as to satisfy R > r. With such formation, the distal end of the protruding portion 18a of the gasket 18 is surely housed within the recess 28c.

Further, the recess 28c of the second embodiment is formed so as to have an inclination with the plate thickness becoming thinner from the edge on the outer circumferential side of the recess 28c toward the inner circumferential side in the radial direction. The edge on the outer circumferential side of the recess 28c is formed substantially at the same position as that of the distal end portion 31b on the inner circumferential side of the staking portion 31. Therefore, the gasket 18 of the cylindrical battery 10 of the present embodiment is gradually inclined downward along the inclination of the recess 28c from the distal end portion 31b of the staking portion 31.

With the inclination provided, the recess 28c of the second embodiment can suppress rising of the gasket 18, as well as a decline in strength by securing the plate thickness on the outer circumferential side of the flange 28b.

Further, in the recess 28c of the second embodiment, since the inclination with the plate thickness gradually becoming thinner from the vicinity of the distal end portion 31b of the staking portion 31 is formed, even when the position of the distal end portion 31b of the staking portion 31 is shifted to the inner side in the radial direction, the sealability of the sealing assembly 17 can still be made high.

As described above, in the cylindrical battery 10 of the present disclosure, with the recess 28c provided in the flange 28b of the cap 28, rising of the protruding portion 18a of the gasket 18 upward beyond the staking shoulder portion 31a after staking the outer housing can 16 is suppressed. Thus, since it is unnecessary to shorten the protruding portion 18a of the gasket 18 protruding from the staking portion 31, it is less likely to deteriorate the insulating performance between the distal end portion 31b of the staking portion 31 and the cap 28, so that the welding quality in welding the coupling plate 40 at the staking shoulder portion 31a can be secured.

Next, using examples, description will be made of results of verifying suppression of the gasket 18 protruding upward beyond the staking portion 31 in the cylindrical battery 10 of the present disclosure. The cylindrical battery 10 under the following conditions was produced and whether the gasket 18 protrudes upward beyond the staking shoulder portion 31a was verified. A hundred cylindrical batteries 10 and a hundred cylindrical batteries 100 were each produced for Examples 1 to 4 and a comparative example.

### <Example 1>

For the cylindrical battery 10 of the first embodiment shown in FIG. 3, the cylindrical battery 10 having the recess 28c with the length R in the radial direction = 1.3 mm and a depth h = 0.10 mm was produced. Note that the thickness of the flange 28b was 0.4 mm.

### <Example 2>

For the cylindrical battery 10 of the first embodiment shown in FIG. 3, the cylindrical battery 10 having the recess 28c with the length R in the radial direction = 1.3 mm and the depth h = 0.15 mm was produced. The others were the same as those in Example 1.

### <Example 3>

For the cylindrical battery 10 of the second embodiment shown in FIG. 4, the cylindrical battery 10 having the recess 28c with an inclination angle θ = 10°, the length R in the radial direction = 1.3 mm, and the depth h = 0.23 mm was produced. The others were the same as those in Example 1.

### <Example 4>

For the cylindrical battery 10 of the second embodiment shown in FIG. 4, the cylindrical battery 10 having the recess 28c with the inclination angle θ = 12°, the length R in the radial direction = 1.3 mm, and the depth h = 0.28 mm was produced. The others were the same as those in Example 1.

### <Comparative Example>

As a comparative example, the cylindrical battery 100 having the conventional configuration shown in FIG. 5 was produced. Note that the thickness of the flange 128b was 0.4 mm.

Table 1 shows the verification results of whether the protruding portions 18a, 118a of the gaskets 18, 118 of the cylindrical batteries 10, 100 in Examples 1 to 4 and the comparative example protruded upward beyond the staking shoulder portions 31a, 131a.

**[Table 1]**

| | LENGTH R IN RADIAL DIRECTION | INCLINATION ANGLE θ | DEPTH h | NUMBER OF GASKETS PROTRUDING UPWARD BEYOND STAKING SHOULDER PORTION |
|---|---|---|---|---|
| EXAMPLE 1 | 1.3mm | --- | 0.10mm | 0/100 |
| EXAMPLE 2 | 1.3mm | --- | 0.15mm | 0/100 |
| EXAMPLE 3 | 1.3mm | 10° | 0.23mm | 0/100 |
| EXAMPLE 4 | 1.3mm | 12° | 0.28mm | 0/100 |
| COMPARATIVE EXAMPLE | | | | 4/100 |

### <Evaluation>

In the cylindrical battery 10 of Examples 1 and 2, no protruding portion 18a of the gasket 18 protruding upward beyond the staking shoulder portion 31a was confirmed, irrespective of the depth h of the recess 28c of the flange 28b. In the cylindrical battery 10 of Examples 3 and 4, no protruding portion 18a of the gasket 18 protruding upward beyond the staking shoulder portion 31a was confirmed, irrespective of whether the inclination angle θ of the recess 28c of the flange 28b was 10° or 12°. By contrast, in the cylindrical battery 100 of the comparative example, in 4 out of 100, the protruding portion 118a of the gasket 118 protruding upward beyond the staking shoulder portion 131a was confirmed.

It is recognized from the above results that in the cylindrical battery 10 of the present disclosure, the protruding portion 18a of the gasket 18 does not protrude upward beyond the staking shoulder portion 31a, and therefore, the performance of welding the coupling plate at the staking shoulder portion is excellent as compared to the cylindrical battery 100 with the conventional structure.

Note that it goes without saying that the present invention is not limited to the aforementioned embodiments and modifications thereof, and various changes and improvements are available within the scope of the matters described in the claims of the present application.

### REFERENCE SIGNS LIST

10, 100 Cylindrical battery, 11 Positive electrode, 12 Negative electrode, 13 Separator, 14 Electrode assembly, 16 Outer housing can, 16a Bottom surface, 16b Side wall, 17 Sealing assembly, 18, 118 Gasket, 18a, 118a Protruding portion, 19 Insulating plate, 20 Insulating plate, 21 Positive electrode tab, 22 Negative electrode tab, 25 Terminal plate, 26, 126 Rupture disk, 27 Insulating plate, 28, 128 Cap, 28a Projection, 28b, 128b Flange, 28c Recess, 28d Hole, 30 Grooved portion, 31, 131 Staking portion, 31a, 131a Staking shoulder portion, 31b, 131b Distal end portion, 40, 140 Coupling plate

## Claims

1. A cylindrical battery comprising:
a bottomed cylinder-shaped outer housing can that houses an electrode assembly; and
a sealing assembly fixed by staking, via a gasket, at a staking portion formed by bending an opening of the outer housing can, wherein
the sealing assembly includes a cap having a flange staked at the staking portion,
the flange of the cap includes a recess formed with a thin plate thickness, and
a protruding portion of the gasket is housed in the recess, the protruding portion protruding from a distal end in a radial direction of the staking portion.

2. The cylindrical battery according to claim 1, wherein the recess comprises an inclination with a plate thickness becoming thinner toward an inner circumferential side in a radial direction of the flange.

3. The cylindrical battery according to claim 1 or 2, wherein when a length in a radial direction of the protruding portion of the gasket is r and a length in a radial direction of the recess is R, the recess is formed so as to satisfy R > r.
